Europäisches Patentamt

European Patent Office

Office européen des brevets

(19)

(11) Numéro de publication: **0 099 839**

**A1**

(12) # DEMANDE DE BREVET EUROPEEN

(21) Numéro de dépôt: 83420106.3

(22) Date de dépôt: 28.06.83

(51) Int. Cl.³: **G 11 B 5/70**
**B 29 D 7/24, C 08 J 5/18**

(30) Priorité: 30.06.82 FR 8211465

(43) Date de publication de la demande:
01.02.84 Bulletin 84/5

(84) Etats contractants désignés:
DE FR GB IT LU NL

(71) Demandeur: RHONE-POULENC FILMS
25, quai Paul Doumer
F-92408 Courbevoie(FR)

(72) Inventeur: Jacquier, Marie-Odile
Clos Saint-Pierre 7, chemin de l'Ile
F-01700 Miribel(FR)

(72) Inventeur: Barbey, Jacques
11, chemin de la Sereine Beynost
F-01700 Miribel(FR)

(74) Mandataire: Chichery, Guy et al,
RHONE-POULENC RECHERCHES Centre de Recherches
de Saint-Fons Service Brevets B.P. 62
F-69190 Saint-Fons(FR)

(54) Film de polyester biaxialement orienté, son procédé de préparation et son application comme support de bande magnétique.

(57) Film de polyester biaxialement orienté présentant une viscosité intrinsèque de 0,6 - 0,75 dl/g, un coefficient d'orientation cristalline supérieur à 0,78, un module longitudinal d'au moins 800 kg/mm² et une stabilité dimensionnelle transversale de 0 - 0,5 % de retrait à 105°C et de 1,5 - 2,5 % de retrait à 150°C.

Le film est obtenu par préchauffage d'un film polyester, étirage transversal suivi d'un traitement thermique, étirage longitudinal, thermofixation du film biétiré puis relaxation.

Le film peut être utilisé comme support pour bande magnétique.

EP 0 099 839 A1

# FILM DE POLYESTER BIAXIALEMENT ORIENTE,
## SON PROCEDE DE PREPARATION ET SON APPLICATION COMME SUPPORT
### DE BANDE MAGNETIQUE

La présente invention a pour objet un film de polyester biaxialement orienté, présentant des propriétés mécaniques et thermiques améliorées, son procédé de préparation et son application comme support de bande magnétique.

La demanderesse a trouvé un nouveau film de polytéréphtalate, d'éthylène glycol éventuellement chargé de particules de type usuel (résidus catalytiques, kaolinite, carbonate de calcium etc ...), ci-après appelé "film polyester", biaxialement orienté, présentant un coefficient d'orientation cristalline particulièrement élevé, ce qui lui confère de très bonnes propriétés mécaniques et de stabilité thermique.

Selon l'invention, le film polyester biaxialement orienté de viscosité intrinsèque comprise entre 0,6 et 0,75 dl/g est caractérisé en ce qu'il présente :

- un coefficient d'orientation cristalline supérieur à 0,78
- un module longitudinal d'au moins 800 kg/mm$^2$
- une stabilité dimensionnelle transversale allant de 0 à 0,5 % de retrait à 105°C et allant de 1,5 à 2,5 % de retrait à 150°C.

La détermination du coefficient d'orientation cristalline est réalisée par mesure de la répartition d'intensité diffractée du vecteur réciproque 1 05 dans le plan du film (le vecteur réciproque 1 05 de la maille cristalline de polyester est choisi comme axe de référence car il est sensiblement parallèle à la direction des chaînes).

Le coefficient d'orientation cristalline C est égal à

$$\frac{[C^+] + [C^-]}{2}$$

$C^+$ et $C^-$ étant définis comme suit :

$$c^+ = \frac{\displaystyle\int_{\phi_0}^{\phi_1} I \cos^2\phi \; d\phi}{\displaystyle\int_{\phi_0}^{\phi_1} I \; d\phi} \qquad\qquad c^- = \frac{\displaystyle\int_{\phi_0}^{\phi_2} I \cos^2\phi \; d\phi}{\displaystyle\int_{\phi_0}^{\phi_2} I \; d\phi}$$

où

- I est l'intensité diffractée, relative au vecteur réciproque $\bar{1}$ 05, à l'angle de diffraction $2\theta = 43°C \pm 0,5$ dans le cas du rayonnement K du cuivre, diminuée de l'intensité du fond continu interpolée à la même valeur angulaire entre les valeurs d'intensités minimales mesurées respectivement aux angles de diffraction $2\theta = 35°C$ et $2\theta = 51°C$ ;

- $\phi$ représente l'angle de diffraction azimutal relatif au vecteur réciproque $\bar{1}$ 05 repéré par rapport à la direction longitudinale dans le plan du film ;

- $\phi_0$ représente l'angle de diffraction relatif au vecteur réciproque $\bar{1}$ 05 correspondant au maximum d'intensité diffractée ;

- $\phi_1 = \phi_0 + 90°C$ et $\phi_2 = \phi_0 - 90°C$

Une orientation cristalline parfaite dans le plan du film correspond a un coefficient d'orientation

$$\frac{[c^+] + [c^-]}{2} = 1$$

Une différence entre les valeurs $c^+$ et $c^-$ est le reflet d'une certaine anisotropie transversale des étirages ; une désorientation totale dans le plan du film correspond à

$$\frac{[c^+] + [c^-]}{2} = 0,5$$

Les particules minérales constituant la charge du film sont celles généralement présentes dans les films de polyesters utilisés notamment comme support pour bande magnétique ; on peut citer à titre d'exemple la silice, le carbonate de calcium ... et tout particulièrement la kaolinite (silicate simple d'aluminium hydraté) ; lesdites particules présentent avantageusement une dimension inférieure à 2,5 µ environ (diamètre médian déterminé à l'aide de l'appareil Sedigraph 5000).

Le film de polyester chargé, soumis aux différents traitements thermiques et mécaniques qui vont être décrits, est obtenu d'une manière classique par transestérification du téréphtalate de diméthyle et de l'éthylène glycol en présence de catalyseurs usuels d'interéchange suivie d'une polycondensation du bis(hydroxyéthyltéréphtalate) ainsi obtenu en présence de catalyseurs usuels de polycondensation ; ledit film est chargé par exemple par introduction d'une suspension glycolique de particules minérales inférieures à 2,5 µ dans le milieu de transestérification, à un stade quelconque de l'opération de transestérification, de préférence au début de la phase distillation du glycol, selon une quantité correspondant à un poids de matière sèche de particules compris entre 0,1 et 1 % et de préférence entre 0,2 et 0,7 % du poids du polyester.

Les opérations de préchauffage et d'étirage transversal du film amorphe peuvent être réalisées à une température comprise entre 80°C et 110°C dans un ou des fours munis d'un dispositif maintenant le film sous tension à l'aide de pinces. Lors de l'opération d'étirage transversal les pinces se déplacent de façon telle que la distance entre les pinces comptées perpendiculairement à la direction du déplacement longitudinal croit selon ce déplacement.

L'opération d'étirage transversal est réalisée de préférence à une température de 15 à 25°C supérieure à la température de transition vitreuse (70°C), soit de 85 à 95°C, et tout particulièrement de 15 à 20°C supérieure à la température de transition vitreuse, soit de 85 à 90°C, jusqu'à un taux d'étirage transversal d'au moins 3 et en général allant de 3,3 à 3,5.

L'opération de préchauffage avant étirage transversal est de préférence réalisée à une température de 5 à 25°C supérieure à celle de l'étirage transversal (par exemple de 95 à 110°C) et tout particulièrement à une température de 8 à 20°C supérieure à la température d'étirage transversal (par exemple entre 98 et 105°C).

4

L'opération de traitement thermique du film transversalement étiré peut être favorablement réalisée dans un four muni d'un dispositif maintenant le film sous tension à l'aide de pinces, à une température de 70 à 85°C. Ce traitement thermique, caractéristique de l'invention, favorise l'élévation du coefficient C.

Le film préchauffé, étiré transversalement et traité thermiquement est ensuite refroidi d'une manière connue sous tension entre pinces à une température inférieure à la température de transition vitreuse du polyester puis est étiré longitudinalement.

L'opération d'étirage longitudinal est réalisée d'une manière connue, à une température comprise entre 80 et 120°C, par passage du film étiré transversalement sur un groupe de rouleaux lents puis sur un groupe de rouleaux rapides de manière à obtenir un taux d'étirage longitudinal compris entre 3,7 et 5 et de préférence compris entre 4 et 5.

Le film biétiré est alors thermofixé d'une manière connue dans un four sous tension, à une température croissant de 150 à 250°C.

Le film est ensuite soumis d'une manière connue à une opération de relaxation thermique transversale ou longitudinale jusqu'à un taux de relaxation pouvant aller jusqu'à 10 % et préférentiellement jusqu'à 2 % et tout particulièrement jusqu'à 1,5 %.

Les films selon l'invention peuvent présenter des cavités annulaires entourant dans le plan du film les particules. Ces cavités ont alors des dimensions particulièrement faibles (diamètre moyen en volume inférieur en général à 3,5 µ avec écart type en volume inférieur à 1 µ.

Le film faisant l'objet de l'invention convient en particulier comme support pour bande magnétique "audio" ou "vidéo" par exemple.

Les exemples qui suivent sont donnés à titre indicatif et ne peuvent être considérés comme une limite du domaine et de l'esprit de l'invention.

Exemple 1

Un polyester de viscosité intrinsèque mesurée dans l'o-chlorophénol égale à 0,64 dl/g est extrudé à 280°C dans une filière plate, puis trempé sur un rouleau refroidi à 40°C.

Le film obtenu est soumis aux traitements suivants :

- préchauffage dans un four à une température de 103°C

– étirage transversal dans une rame à 88°C au taux de 3,3

– traitement thermique dans un four sous tension à 80°C

– refroidissement sous tension à 60°C.

Le film étiré transversalement puis refroidi est ensuite préchauffé par passage sur des rouleaux lents à une température allant de 80 à 90°C, puis étiré longitudinalement au taux de 4,5 par passage sur des rouleaux rapides à environ 100-105°C.

Le film biétiré est ensuite thermofixé dans un four sous tension à une température croissant de 150 à 220°C, puis relaxé transversalement à un taux de retrait de 1,5 % à une température décroissant de 180 à 100°C.

Le film ainsi obtenu présente les caractéristiques suivantes :

– viscosité intrinsèque : 0,64 dl/g

– module longitudinal : 830 kg/mm$^2$

– stabilité dimensionnelle : retrait de 0,2 % à 105°C et de 2 % à 150°C.

– orientation cristalline : $\dfrac{[C^+] + [C^-]}{2} = 0,80$

## Exemple 2

### Préparation de la charge

On broie pendant une heure dans un broyeur à billes de verre un mélange de glycol et de kaolinite, ledit mélange contenant 27 % en poids de kaolinite.

Le mélange est ensuite filtré puis dilué par du glycol afin de contenir 15 % en poids de kaolinite.

Le mélange obtenu est ensuite centrifugé pour obtenir une suspension glycolique de particules de kaolinite présentant une taille maximum de 2,5 µ.

### Préparation du polymère chargé

On introduit dans un réacteur :

. 1425 kg de diméthyltéréphtalate

. 863 kg d'éthylène glycol

. 240 g d'acétate de manganèse (54 ppm de Mn)

. 700 g d'oxyde d'antimoine (418 ppm de Sb).

On chauffe jusqu'à 220°C pour distiller le méthanol ; 5 minutes après avoir fini de distiller le méthanol, on ajoute 38 ppm de phosphore sous forme d'acide phosphorique, puis 33,25 kg de suspension glycolique de kaolinite.

On poursuit l'opération d'interéchange jusqu'à la fin de la distillation du glycol.

On soumet ensuite la masse réactionnelle à une opération de condensation à 289°C sous vide (0,6 $10^2$ Pa) pendant 4 heures. On obtient 1425 kg de polymère contenant 0,35 % en poids de charge, et de viscosité intrinsèque mesurée dans l'o-chlorophénol de 0,64 dl/g.

Préparation du film

Le polymère est séché à 170°C, extrudé à 285°C dans une filière plate, puis trempé sur un rouleau refroidi à 80°C.

Le film obtenu est soumis aux traitements suivants :

- préchauffage dans un four à une température de 103°C
- étirage transversal dans une rame à 88°C au taux de 3,3
- traitement thermique dans un four sous tension à 80°C
- refroidissement sous tension à 60°C.

Le film étiré transversalement puis refroidi est ensuite préchauffé par passage sur des rouleaux lents à une température allant de 80 à 90°C, puis étiré longitudinalement au taux de 4,5 par passage sur des rouleaux rapides à environ 100-105°C.

Le film biétiré est ensuite thermofixé dans un four sous tension à une température croissant de 150 à 220°C, puis relaxé transversalement à un taux de retrait de 1,5 % à une température décroissant de 180 à 100°C

Caractéristiques du film

- viscosité intrinsèque : 0,64 dl/g
- module longitudinal : 840 kg/mm$^2$
- stabilité dimensionnelle : retrait de 0,2 % à 105°C et de 1,8 % à 150°C.
- orientation cristalline : $$\frac{[c^+] + [c^-]}{2} = 0,79$$

REVENDICATIONS

1 - Film de polyester biaxialement orienté de viscosité intrinsèque comprise entre 0,6 et 0,75 dl/g, caractérisé en ce qu'il présente :
- un coefficient d'orientation cristalline supérieur à 0,78
- un module longitudinal d'au moins 800 kg/mm$^2$
- une stabilité dimensionnelle transversale allant de 0 à 0,5 % de retrait à 105°C et allant de 1,5 à 2,5 % de retrait à 150°C.

2 - Procédé de préparation du film faisant l'objet de la revendication 1, consistant à étirer transversalement après préchauffage un film de polyester éventuellement chargé et de viscosité intrinsèque comprise entre 0,6 et 0,75 dl/g jusqu'à un taux d'étirage transversal d'au moins 3, puis longitudinalement jusqu'à un taux d'étirage longitudinal compris entre 3,7 et 5, à thermofixer le film biétiré et à soumettre le film thermofixé à une opération de relaxation thermique jusqu'à un taux de relaxation pouvant aller jusqu'à 10 %, ledit procédé étant caractérisé en ce que l'opération d'étirage transversal est suivie d'un traitement thermique du film étiré transversalement, à une température comprise entre la température de transition vitreuse du polytéréphtalate d'éthylène glycol et 15°C au-dessus de la température de transition vitreuse.

3 - Procédé selon la revendication 2, caractérisé en ce que l'opération d'étirage transversal est réalisée à une température de 15 à 25°C supérieure à la température de transition vitreuse du polytéréphtalate d'éthylène glycol.

4 - Procédé selon la revendication 3, caractérisé en ce que l'opération d'étirage transversal est réalisée à une température de 15 à 20°C supérieure à la température de transition vitreuse du polytéréphtalate d'éthylène glycol.

5 - Procédé selon l'une quelconque des revendications 2 à 4, caractérisé en ce que l'opération d'étirage transversal est précédée d'une opération de préchauffage réalisée à une température de 5 à 25°C supérieure à celle de l'étirage transversal.

6 - Procédé selon la revendication 5, caractérisé en ce que l'opération de préchauffage est réalisée à une température de 8 à 20°C supérieure à celle de l'étirage transversal.

7 - Application du film faisant l'objet de la revendication 1 comme support pour bande magnétique.

Office européen
des brevets

**RAPPORT DE RECHERCHE EUROPEENNE**

Numéro de la demande

EP 83 42 0106

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-1 345 217 (DU PONT DE NEMOURS) <br> * Résumé; page 5, colonne de droite, lignes 30-39; page 6, colonne de droite, lignes 48-49; page 4, colonne de droite, lignes 50-53 * | 2-6 | G 11 B 5/70 <br> B 29 D 7/24 <br> C 08 J 5/18 |
| | --- | | |
| Y | US-A-2 995 779 (F.R. WINTER) <br> * Revendications; colonne 5, lignes 34-36; figures 1-3 * | 2-6 | |
| | --- | | |
| A | US-A-3 432 591 (C.J. HEFFELFINGER) <br> * Revendications; colonne 15, lignes 36-53; colonne 4, lignes 49-56 * | 1 | |
| | ----- | | |

**DOMAINES TECHNIQUES RECHERCHES (Int. Cl. ³)**

C 08 J
B 29 D
G 11 B

Le présent rapport de recherche a été établi pour toutes les revendications

| Lieu de la recherche | Date d'achèvement de la recherche | Examinateur |
|---|---|---|
| LA HAYE | 05-10-1983 | VAN GOETHEM G.A.J.M. |